# EUROPEAN PATENT SPECIFICATION

(11) **EP 2 634 490 B1**
(45) Date of publication and mention of the grant of the patent: **11.04.2018**
(21) Application number: 13157100.2
(22) Date of filing: 28.02.2013
(51) Int. Cl.: F23R 3/30, F23D 11/10, F23D 11/22

(54) **Gas turbine combustor**
Gasturbinenbrennkammer
Chambre de combustion de turbine à gaz

(30) Priority: 28.02.2012 JP 2012040867
(43) Date of publication of application: 04.09.2013
(73) Proprietor: Mitsubishi Hitachi Power Systems, Ltd., Yokohama 220-8401 (JP)
(72) Inventor: Hirata, Yoshitaka, Tokyo, 100-8220 (JP); Takahashi, Hirokazu, Tokyo, 100-8220 (JP); Sekiguchi, Tatsuya, Tokyo, 100-8220 (JP); Koizumi, Hiromi, Tokyo, 100-8220 (JP); Yoshida, Shohei, Tokyo, 100-8220 (JP); Sasao, Toshifumi, Tokyo, 100-8220 (JP); Hayashi, Akinori, Tokyo, 100-8220 (JP)
(74) Representative: MERH-IP Matias Erny Reichl Hoffmann Patentanwälte PartG mbB

(56) References cited:
- JP-A- H05 106 806
- US-A- 2 907 527
- US-A- 3 777 983

## Description

### BACKGROUND OF THE INVENTION

### 1. Field of the Invention

The present invention relates to a gas turbine combustor.

### 2. Description of the Related Art

Liquid-fueled combustors generally use a fuel nozzle to atomize liquid fuel, promote mixing of a group of reduced-diameter fuel droplets atomized with combustion air, and then burn the mixture.

Examples of fuel nozzles adapted to atomize liquid fuel include a two-fluid fuel nozzle and a single-fluid fuel nozzle. The two-fluid fuel nozzle is adapted to atomize liquid fuel using the shear force of a fluid other than liquid fuel, e.g., high-pressure air. The single-fluid fuel nozzle is adapted to atomize liquid fuel by increasing the supply pressure of liquid fuel and thereby accelerating the jet velocity of the liquid fuel.

The former two-fluid fuel nozzle is superior in atomization performance to the single-fluid fuel nozzle and has an effect of suppressing the discharge amount of soot, which is one of the problems in the liquid-fueled combustor. However, since the two-fluid fuel nozzle needs air for atomization, when, for example, the two-fluid fuel nozzle may use the air extracted from the compressor of a gas turbine, it is necessary to increase the pressure of the air thus extracted, Therefore, the power for increasing the pressure of the air is needed, and the extracted air is cooled and then supplied to the combustor. Thus, there is concern about the efficiency degradation of the gas turbine.

On the other hand, the single-fluid fuel nozzle does not need an atomized air supply system; therefore, it is advantageous to the above-mentioned efficiency degradation and the simplification of an installation, However, the single-fluid fuel nozzle is inferior in atomization performance to the two-fluid fuel nozzle. Such a tendency is prominent particularly under the condition of low supply pressure.

Liquid fuel nozzles have much diversity in spray type and structure and have heretofore been proposed in large numbers, for example, by JP-2007-155170-A, JP-T-2002-519617 and Japanese Utility Model Laid-Open No. Hei 2-28923.

In US 2 907 527 A, a fluid atomizing nozzle is shown. The fuel atomizing nozzle uses pressurized fuel as the atomizing gas to obtain a fine dispersion of liquid fuel particles. The vaporous fuel is sprayed into the main combustion chamber or through the after burner nozzles.

### SUMMARY OF THE INVENTION

One of the important subjects for development of liquid fossil fueled combustors is to improve the suppression of the discharge amount of white smoke and soot generated during start-up. To suppress the discharge amount of white smoke and soot, it is effective means to atomize fuel into fine liquid droplets, thereby promoting mixing of the fuel with air. Therefore, it can be said that the atomization technique of liquid fuel is very important.

As described above, it is effective to use a fluid other than liquid fuel in order to promote the atomization of fuel. In general, high-pressure air is frequently used as the fluid. To obtain the high-pressure air, air is extracted from the compressor of a gas turbine, the air thus extracted is cooled and increased in pressure, and such air is supplied to the combustor. Thus, a thermal loss and power for the compressor will lower the efficiency of the overall gas turbine.

It is an object of the present invention, therefore, to provide a gas turbine combustor that can reduce the lowering of gas turbine efficiency as much as possible and promote the atomization of liquid fossil fuel.

According to an aspect, there is provided a gas turbine combustor adapted to mix liquid fuel with combustion air led from a compressor, burn the mixture and supply combustion gas generated to a gas turbine. The gas turbine combustor includes: a fuel injection nozzle that atomizes the liquid fuel into fine liquid droplets. The fuel injection nozzle includes a first system adapted to supply the liquid fuel and a second system adapted to supply a fluid for atomizing the liquid fuel. The fluid to be used is low-boiling liquid fuel. The gas turbine combustor further includes means for heating the low-boiling liquid fuel.

The present invention can provide the gas turbine combustor that can promote atomization of liquid fossil fuel while reducing the lowering of gas turbine efficiency as much as possible.

### BRIEF DESCRIPTION OF THE DRAWINGS

Fig. 1 is an overall configuration diagram of a gas turbine according to a first embodiment not covered by the present invention.
Fig. 2 is a longitudinal cross-sectional view of a fuel injection nozzle according to the first embodiment not covered by the present invention.
Fig. 3 is an overall configuration diagram of a gas turbine according to a second embodiment covered by the present invention.
Fig. 4 is a longitudinal cross-sectional view of a fuel injection nozzle according to the second embodiment covered by the present invention.
Fig. 5 is a longitudinal cross-sectional view of a fuel injection nozzle according to a third embodiment covered by the present invention.
Fig. 6 is a longitudinal cross-sectional view of a fuel injection nozzle according to a fourth embodiment covered by the present invention.

### DESCRIPTION OF THE PREFERRED EMBODIMENTS

Preferred embodiments of gas turbine combustors employing the present invention will hereinafter be described with reference to the drawings.

Incidentally, gas turbine combustors burning liquid fossil fuel according to the embodiments of the present invention described below have respective fuel injection nozzles as means for atomizing liquid fossil fuel. The fuel injection nozzles are configured to heat and gasify low-boiling liquid fuel and use the shear force of the low-boiling liquid fossil fuel thus heated and gasified to atomize the liquid fossil fuel. Thus, the gas turbine combustors can promote the atomization of the liquid fossil fuel while suppressing the lowering of gas turbine efficiency.

The embodiments of the present invention described below exemplify alcohol fuel as the low-boiling liquid fuel. Specifically, the low-boiling liquid fuel is supposed which has a boiling point falling within the range from ordinary temperature to about 150°C and which is liquid in an ordinary temperature state.

### (First Embodiment)

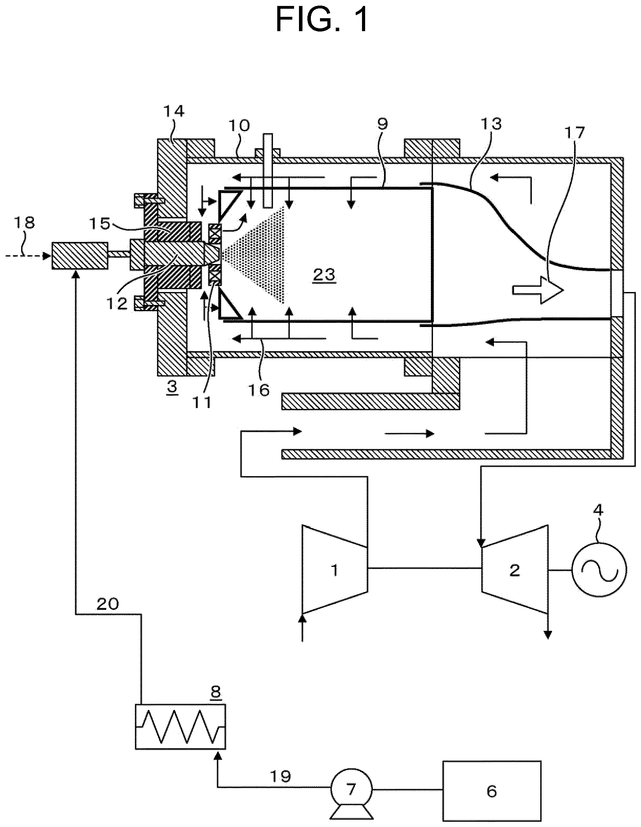

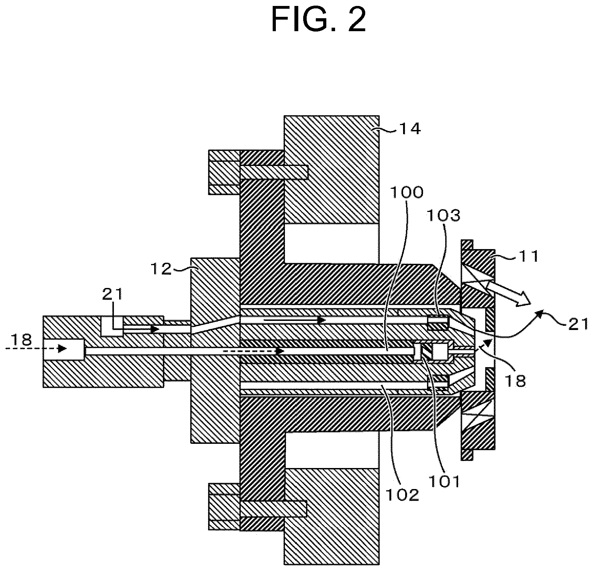

A first embodiment not covered by the present invention will hereinafter be described with reference to Figs. 1 and 2. Fig. 1 includes a longitudinal cross-sectional view illustrating the configuration of a gas turbine combustor according to the first embodiment and a schematic configuration diagram illustrating the overall configuration of a gas turbine plant equipped with the gas turbine combustor.

The gas turbine plant illustrated in Fig. 1 mainly includes a compressor 1, a combustor 3 and a turbine 2. The compressor 1 compresses air to generate high-pressure combustion air. The combustor 3 mixes liquid fossil fuel 18 with combustion air 16 led from the compressor 1 to generate combustion gas 17. The turbine 2 receives the combustion gas 17 generated in the combustor 3. Incidentally, the respective shafts of the compressor 1, the turbine 2 and the generator 4 are connected to one another.

The combustor 3 includes an inner cylinder 9, a transition piece 13, an outer cylinder 10 and an end cover 14. The inner cylinder 9 forms a combustion chamber 23 for burning the combustion air 16 and fuel to generate the combustion gas 17. The transition piece 13 is adapted to lead the combustion gas 17 generated in the combustion chamber 23 to the turbine 2. The outer cylinder 10 houses the inner cylinder 9 and the transition piece 13.

An air swirler 11 is disposed at an axial-central position of the inner cylinder 9 on the upstream side in the flow direction of the combustion gas. The air swirler 11 is adapted to swirl the combustion air 16 to promote the mixing of the swirling combustion air 16 with liquid fossil fuel 18 for stable formation of flames. A fuel injection nozzle 12 for atomizing the liquid fossil fuel 18 is disposed upstream of the air swirler 11.

Fig. 2 is a configuration view of the fuel injection nozzle 12. The fuel injection nozzle 12 has a liquid fossil fuel system 100 for the liquid fossil fuel 18 as a first system formed at the axial center thereof. In addition, the fuel injection nozzle 12 includes a swirler 101 installed in the middle of the liquid fossil fuel system 100. The liquid fossil fuel 18 is swirled by the swirler 101 and jetted. An alcohol fuel system 102 as a second system adapted to supply a fluid for atomization of the liquid fossil fuel 18 is formed on the outer circumference of the liquid fossil fuel system 100. Similarly to the liquid fossil fuel, the fluid is swirled by a swirler 103 installed in the middle of the alcohol fuel system 102 and is jetted.

The gas turbine combustor according to the first embodiment configured as described above uses low-boiling liquid fuel (alcohol fuel in the present embodiment) as the fluid for atomization of the liquid fossil fuel 18. In addition, the gas turbine combustor has a supply system including an alcohol fuel tank 6 for storing alcohol fuel therein, a pump 7 and a supply pipe 19, a heat exchanger 8 for heating and gasifying the alcohol fuel 21, and a system 20 for supplying gasified fuel alcohol.

According to the gas turbine combustor according to the first embodiment configured as above, the liquid fossil fuel 18 and the gasified or partially gasified alcohol fuel 21 are jetted from the fuel injection nozzle 12. Thus, the gas turbine combustor has an effect of promoting the atomization of the liquid fossil fuel 18 through the shear force of the alcohol fuel 21.

Even if gas and liquid is jetted as a two-phase flow because the alcohol fuel 21 is not gasified completely, the alcohol fuel as liquid jetted from the fuel injection nozzle 12 is evaporated inside the high-temperature combustion chamber. Thus, also more effective atomization of the liquid fossil fuel 18 through volume expansion energy resulting from the evaporation can be expected.

Further, the supply of the liquid fossil fuel 18 can be reduced according to the supply of the alcohol fuel 21 compared with the single combustion of the liquid fossil fuel 18 as long as under the same combustion temperature condition. In general, as the flow rate of the liquid fossil fuel 18 is lower, the two-fluid fuel injection nozzle can promote atomization. Therefore, also the promoted atomization resulting from the reduced flow rate can be expected. Further, if the flow rate of the liquid fossil fuel 18 is reduced, also the amount of soot generated by combustion can be reduced.

In this way, the gas turbine can be reduced in efficiency degradation compared with the system using high-pressure air. In addition, the atomization-promoting effect of the liquid fossil fuel 18 and the effect resulting from the reduced flow rate of the liquid fossil fuel 18 can reduce the discharged amount of soot.

When the liquid fossil fuel 18 is used to start the gas turbine, if an ignition failure occurs, colored smoke (white smoke) is likely to be discharged. However, the gas turbine combustor configured according to the present invention can be ignited, for example, only by the alcohol fuel 21 without supplying the liquid fossil fuel 18 when the gas turbine is started. If the gas turbine combustor is operated so as to be ignited only by the alcohol fuel 21, the occurrence of colored smoke can be prevented also in the event that the ignition failure occurs.

As described above, the fuel injection nozzle 12 uses the alcohol fuel 21, which is low-boiling liquid fuel. Therefore, if not only the alcohol fuel 21 is completely gasified but also it becomes the two-phase flow of gas and liquid and is jetted, satisfactory atomization performance can be maintained. Therefore, a heat source with unstable temperature can be used as a heat source for heating and gasifying the alcohol fuel 21. Specifically, an approach to use an electric heater or exhaust heat of a gas turbine can be considered as an approach to heat and gasify the alcohol fuel 21. However, if natural energy such as solar heat or ground heat is used, the efficiency of the overall plant can further be improved.

If plant-based bioethanol is used as the low-boiling liquid fuel, also CO2 reduction can be achieved because of carbon neutrality. Since bioethanol has greater density than LNG, which is common gas fuel, when the bioethanol is jetted at any velocity, kinetic energy thereof increases. Thus, also the atomization promotion of liquid fuel can be expected.

### (Second Embodiment)

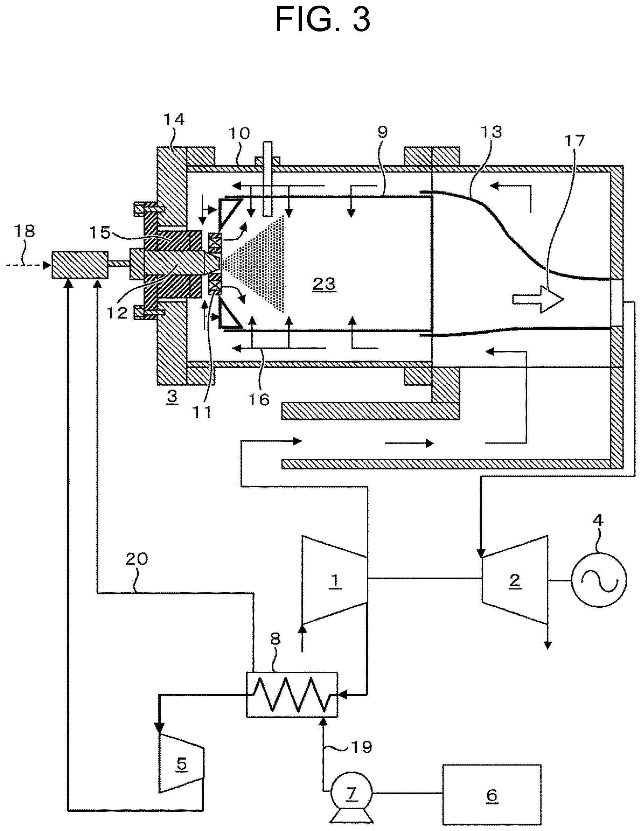

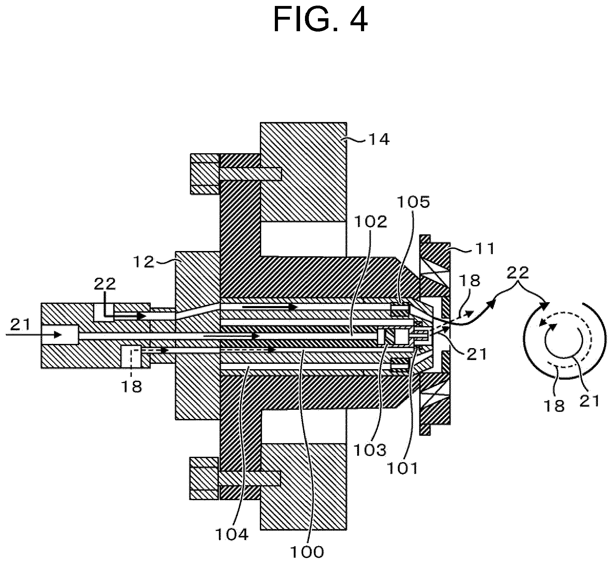

A second embodiment configured according to the present invention will hereinafter be described with reference to Figs. 3 and 4. Fig. 3 includes a longitudinal cross-sectional view illustrating the configuration of a gas turbine combustor according to the second embodiment of the present invention and a schematic configuration diagram illustrating the overall configuration of a gas turbine plant equipped with the gas turbine combustor. Fig. 4 is a partial detailed cross-sectional view of a fuel injection nozzle 12 of Fig. 3. The basic configuration of the second embodiment is the same as that of the first embodiment. The second embodiment according to the invention is different from the first embodiment which is not covered by the present invention in that the heat of high-pressure atomization air is used as means for heating low-boiling liquid fuel (alcohol fuel in the present embodiment). As illustrated in Fig. 4, the fuel injection nozzle 12 of the present embodiment has a triple-tube structure including a high-pressure atomization air system 104, as a third system, for supplying high-pressure atomization air, in addition to a liquid fossil fuel system 100 as a first system and an alcohol fuel system 102 as a second system.

Atomization air 22 is usually generated as below: Air discharged from a compressor 1 is partially extracted. The extracted air is reduced in temperature by a water-cooled heat exchanger. The temperature-reduced air is pressurized to a predetermined pressure by an atomization air compressor 5. The pressurized air is then supplied to the high-pressure atomization air system 104 of the fuel injection nozzle 12. The heat removed by the water-cooled heat exchanger is not recovered by a gas turbine; therefore, the efficiency of the gas turbine is lowered.

On the other hand, the second embodiment of the present invention includes a heat exchanger 8 which exchanges heat between the atomization air extracted from the compressor 1 and alcohol fuel, in place of the conventional water-cooled heat exchanger. Alcohol fuel is used in place of water to cool the atomization air. In contrast, the heat of the atomization air is used to heat and gasify the alcohol fuel and the gasified alcohol fuel is supplied to the fuel injection nozzle 12. This contributes to the atomization of the liquid fossil fuel 18 while recovering the heat of the extracted air.

As illustrated in Fig. 4, the fuel injection nozzle 12 is formed at its axial-center position with a jet hole adapted to jet alcohol fuel 21; at the outer circumference of the jet hole for the alcohol fuel 21, with a jet hole adapted to jet liquid fossil fuel 18; and at the further outer circumference of the jet hole for the liquid fossil fuel 18, with a jet hole adapted to jet atomization air 22. Among swirlers 101, 103, 105 installed on respective systems, only the swirler 101 for the liquid fossil fuel 18 is made to have a swirl direction reverse to those of the swirlers 103, 105. In this way, the alcohol fuel 21 is jetted along the inner circumference of the jetted liquid fossil fuel 18 and the atomization air 22 is jetted along the outer circumference of the jetted liquid fossil fuel 18. The atomization of the liquid fossil fuel 18 can be promoted by the shear forces of the alcohol fuel 21 and the atomization air 22. Thus, more effective reduction of soot than the first embodiment can be expected.

Also the present system may not need to gasify the alcohol fuel completely, which produces the same effect as that of the first embodiment.

### (Third Embodiment)

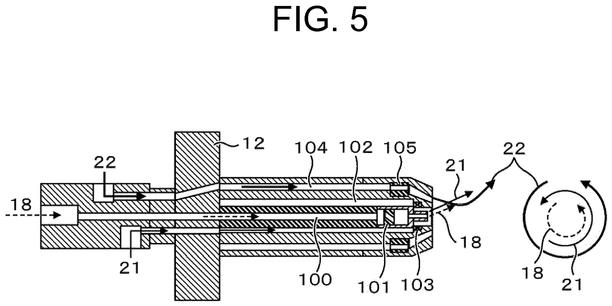

A third embodiment of the present invention will hereinafter be described with reference to Fig. 5. The basic configuration of the present embodiment is the same as that of the second embodiment. The present embodiment is different from the second embodiment in the configuration of a fuel injection nozzle 12. The fuel injection nozzle 12 of the present embodiment is formed, at its center, with a jet hole adapted to jet liquid fossil fuel 18; at the outer circumference of the jet hole for the liquid fossil fuel 18, with a jet hole adapted to jet alcohol fuel 21; and at the further outer circumference of the jet hole for the alcohol fuel 21, with a jet hole adapted to jet atomization air 22.

In general, temperature at which a coking phenomenon starts differs depending on the kind of fuel. The coking phenomenon is such that liquid fossil fuel is subjected to surrounding heat to become solidified. It is said that if the fuel is e.g. light oil, such temperature is about 180°C. Therefore, it has heretofore been necessary to control the temperature of the high-pressure atomization air to be supplied to the fuel injection nozzle at a level not higher than such temperature in view of the prevention of coking.

However, in the present embodiment, an alcohol fuel system 102 is disposed between a high-pressure atomization air system 104 and a liquid fossil fuel system 100; therefore, the heat of the atomization air 22 does not directly transfer to the liquid fossil fuel 18. In addition, since the alcohol fuel is oxygen-contained fuel, it is hard to be coked. Therefore, it is possible to more improve reliability for coking in the liquid fossil system 100.

The present embodiment does not need to excessively cool the atomization air 22; therefore, it has also an effect capable of reducing the lowering of gas turbine efficiency.

### (Fourth Embodiment)

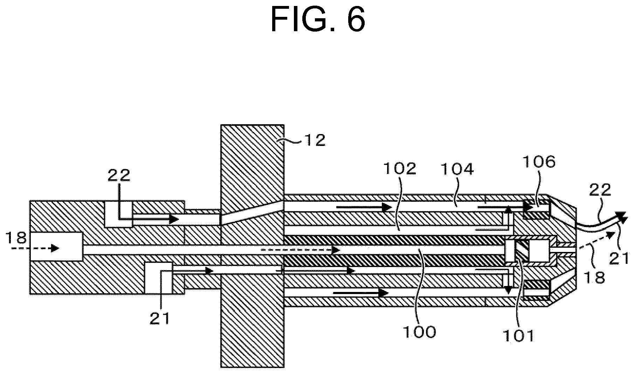

A fourth embodiment of the present invention will hereinafter be described with reference to Fig. 6. Fig. 6 is a longitudinal cross-sectional view of a fuel injection nozzle 12 according to the fourth embodiment of the present invention. The basic configuration of the present embodiment is the same as that of the second embodiment. In the present embodiment, a high-pressure atomization air system 104 is configured to merge with an alcohol fuel system 102 in the fuel injection nozzle 12, whereby atomization air 22 and alcohol fuel 21 are mixed with each other and then jetted.

With the embodiment of the present invention configured as above, the alcohol fuel 21 is supplied to the fuel injection nozzle 12 as it is liquid. The alcohol fuel 21 is then heated and gasified by the heat of the atomization air 22 in the fuel injection nozzle 12 and jetted. This eliminates a heat exchanger for cooling the atomization air 22 and heating the alcohol fuel 21, which allows for a cost reduction. Since the flow rate of the atomization air 22 can be reduced according to the supply of the alcohol fuel, an improvement in efficiency due to a reduction in the amount of bleed air can be expected.

The combination of the liquid fossil fuel 18 with e.g. the alcohol fuel 21 has been described thus far. However, it goes without saying that even if alcohol fuel may be used in place of the liquid fossil fuel 18, the effect of the present invention can be expected.

## Claims

1. A gas turbine combustor adapted to mix liquid fossil fuel with combustion air led from a compressor (1), burn the mixture and supply combustion gas (17) generated to a gas turbine (2), the gas turbine combustor (3) comprising:
a fuel injection nozzle (12) that atomizes the liquid fossil fuel (18) into fine liquid droplets, the fuel injection nozzle (12) including a first system (100) adapted to supply the liquid fossil fuel (18), and a second system (102) that,
is adapted to supply alcohol fuel as a fluid for atomizing the liquid fuel (18), wherein the second system, for supplying the alcohol fuel separately from the liquid fossil fuel, has a supply system including an alcohol fuel tank for storing alcohol fuel therein, a pump and a supply pipe ; and
means for heating the alcohol fuel (21),
**characterized in that**
the fuel injection nozzle (12) includes a third system (104) adapted to supply atomization air (22) for atomizing the liquid fuel (18), and
the means for heating the alcohol fuel (21) supplied to the second system (102) is adapted to use heat of the atomization air (22) to be supplied to the third system (104) to heat the alcohol fuel (21).

2. The gas turbine combustor according to claim 1,
wherein the fuel injection nozzle (12) is formed with a first jet hole, a second jet hole and a third jet hole from an axial center toward an outer circumferential side of the fuel injection nozzle (12),
the first jet hole is adapted to jet the alcohol fuel (21) supplied from the second system (102),
the second jet hole is adapted to jet the liquid fuel (18) supplied from the first system (100), and
the third jet hole is adapted to jet the atomization air (22) supplied from the third system (104).

3. The gas turbine combustor according to claim 1,
wherein the fuel injection nozzle (12) is formed with a first jet hole, a second jet hole and a third jet hole from an axial center toward an outer circumferential side of the fuel injection nozzle (12),
the first jet hole is adapted to jet the liquid fuel (18) supplied from the first system (100),
the second jet hole is adapted to jet the alcohol fuel (21) supplied from the second system (102), and
the third jet hole is adapted to jet the atomization air (22) supplied from the third system (104).

4. The gas turbine combustor according to claim 1,
wherein the second system (102) is configured to merge with the third system (104) in the fuel injection nozzle (12).

5. A method for operating the gas turbine combustor according to claim 1,
wherein the liquid fossil fuel (18) is supplied to the first system (100),
the alcohol fuel (21) that has been heated by the means for heating the alcohol fuel (21) is supplied to the second system (102), and
the atomization air (22) that has been used to heat the alcohol fuel (21) by the means for heating the alcohol fuel (21) is supplied to the third system (104).

6. A method for operating the gas turbine combustor according to claim 5,
wherein plant-based bioethanol (21) is supplied to the second system (102) as the alcohol fuel.

## Patentansprüche

1. Gasturbinenverbrennungsvorrichtung, die dafür ausgelegt ist, flüssigen fossilen Brennstoff mit von einem Kompressor (1) zugeführter Verbrennungsluft zu mischen, das Gemisch zu verbrennen und erzeugtes Verbrennungsgas (17) einer Gasturbine (2) zuzuführen, wobei die Gasturbinenverbrennungsvorrichtung (3) Folgendes umfasst:
eine Brennstoffeinspritzdüse (12), die den flüssigen fossilen Brennstoff (18) in feine Flüssigkeitströpfchen zerstäubt, wobei die Einspritzdüse (12) ein erstes System (100), das dafür ausgelegt ist, den flüssigen fossilen Brennstoff (18) zuzuführen, und ein zweites System (102), das dafür ausgelegt ist, Alkoholbrennstoff als ein Fluid zum Zerstäuben des flüssigen Brennstoffs (18) zuzuführen, umfasst, wobei das zweite System zum getrennten Zuführen des Alkoholbrennstoffs und des flüssigen fossilen Brennstoffs ein Zuführungssystem mit einem Alkoholbrennstofftank zum Speichern von Alkoholbrennstoff darin, eine Pumpe und ein Zuleitungsrohr aufweist; und
Mittel zum Erwärmen des Alkoholbrennstoffs (21), **dadurch gekennzeichnet, dass**
die Brennstoffeinspritzdüse (12) ein drittes System (104) umfasst, das dafür ausgelegt ist, Zerstäubungsluft (22) zum Zerstäuben des flüssigen Brennstoffs (18) zuzuführen, und
die Mittel zum Erwärmen des dem zweiten System (102) zugeführten Alkoholbrennstoffs (21) dafür ausgelegt sind, Wärme der Zerstäubungsluft (22) zu verwenden, um sie dem dritten System (104) zuzuführen, um den Alkoholbrennstoff (21) zu erwärmen.

2. Gasturbinenverbrennungsvorrichtung nach Anspruch 1,
wobei die Brennstoffeinspritzdüse (12) von einer axialen Mitte in Richtung einer Außenumfangsseite der Brennstoffeinspritzdüse (12) mit einer ersten Düsenöffnung, einer zweiten Düsenöffnung und einer dritten Düsenöffnung ausgebildet ist,
die erste Düsenöffnung dafür ausgelegt ist, den vom zweiten System (102) zugeführten Alkoholbrennstoff (21) auszustoßen,
die zweite Düsenöffnung dafür ausgelegt ist, den vom ersten System (100) zugeführten flüssigen Brennstoff (18) auszustoßen, und
die dritte Düsenöffnung dafür ausgelegt ist, die vom dritten System (104) zugeführte Zerstäubungsluft (22) auszustoßen.

3. Gasturbinenverbrennungsvorrichtung nach Anspruch 1,
wobei die Brennstoffeinspritzdüse (12) von einer axialen Mitte in Richtung einer Außenumfangsseite der Brennstoffeinspritzdüse (12) mit einer ersten Düsenöffnung, einer zweiten Düsenöffnung und einer dritten Düsenöffnung ausgebildet ist,
die erste Düsenöffnung dafür ausgelegt ist, den vom ersten System (100) zugeführten flüssigen Brennstoff (18) auszustoßen,
die zweite Düsenöffnung dafür ausgelegt ist, den vom zweiten System (102) zugeführten Alkoholbrennstoff (21) auszustoßen, und
die dritte Düsenöffnung dafür ausgelegt ist, die vom dritten System (104) zugeführte Zerstäubungsluft (22) auszustoßen.

4. Gasturbinenverbrennungsvorrichtung nach Anspruch 1,
wobei das zweite System (102) konfiguriert ist, mit dem dritten System (104) in der Brennstoffeinspritzdüse (12) vereinigt zu sein.

5. Verfahren zum Betreiben der Gasturbinenverbrennungsvorrichtung nach Anspruch 1,
wobei der flüssige fossile Brennstoff (18) dem ersten System (100) zugeführt wird,
der Alkoholbrennstoff (21), der durch die Mittel zum Erwärmen des Alkoholbrennstoffs (21) erhitzt wurde, dem zweiten System (102) zugeführt wird, und
die Zerstäubungsluft (22), die verwendet wurde, den Alkoholbrennstoff (21) durch die Mittel zum Erwärmen des Alkoholbrennstoffs (21) zu erwärmen, dem dritten System (104) zugeführt wird.

6. Verfahren zum Betreiben der Gasturbinenverbrennungsvorrichtung nach Anspruch 5,
wobei dem zweiten System (102) Bioethanol (21) auf pflanzlicher Basis als der Alkoholbrennstoff zugeführt wird.

## Revendications

1. Unité de combustion pour turbine à gaz, adaptée à mélanger un combustible fossile liquide avec de l'air de combustion amené depuis un compresseur (1), à faire brûler le mélange et à alimenter les gaz de combustion (17) générés à une turbine à gaz (2), l'unité de combustion pour turbine à gaz (3) comprenant :
une buse d'injection de combustible (12) qui atomise le combustible fossile liquide (18) en fines gouttelettes de liquide, la buse d'injection de combustible (12) incluant un premier système (100) adapté pour alimenter le combustible fossile liquide (18), et un second système adapté à alimenter de l'alcool combustible à titre de fluide pour atomiser le combustible liquide (18), dans lequel le second système, afin d'alimenter l'alcool combustible séparément par rapport au combustible fossile liquide, comprend un système d'alimentation qui inclut un réservoir d'alcool combustible pour stocker à l'intérieur de l'alcool combustible, une pompe et un tube d'alimentation ; et
un moyen pour chauffer l'alcool combustible (21),
**caractérisée en ce que**
la buse d'injection de combustible (12) inclut un troisième système (104) adapté pour alimenter de l'air d'atomisation (22) afin d'atomiser le combustible liquide (18), et
le moyen pour chauffer l'alcool combustible (21) alimenté au second système (102) est adapté à utiliser la chaleur de l'air d'atomisation (22) à alimenter au troisième système (104) pour chauffer l'alcool combustible (21).

2. Unité de combustion pour turbine à gaz selon la revendication 1,
dans laquelle la buse d'injection de combustible (12) est formée avec un premier trou à jet, un second trou à jet et un troisième trou à jet depuis un centre axial en direction d'un côté circonférentiel extérieur de la buse d'injection de combustible (12),
le premier trou à jet est adapté à faire un jet d'alcool combustible (21) alimenté depuis le second système (102),
le second trou à jet est adapté à faire un jet de combustible liquide (18) alimenté depuis le premier système (100), et
le troisième trou à jet est adapté à faire un jet d'air d'atomisation (22) alimenté depuis le troisième système (104).

3. Unité de combustion pour turbine à gaz selon la revendication 1,
dans laquelle la buse d'injection de combustible (12) est formée avec un premier trou à jet, un second trou à jet et un troisième trou à jet depuis un centre axial en direction d'un côté circonférentiel extérieur de la buse d'injection de combustible (12),
le premier trou à jet est adapté à faire un jet du combustible liquide (18) alimenté depuis le premier système (100),
le second trou à jet est adapté à faire un jet d'alcool combustible (21) alimenté depuis le second système (102), et
le troisième trou à jet est adapté à faire un jet de l'air d'atomisation (22) alimenté depuis le troisième système (104).

4. Unité de combustion pour turbine à gaz selon la revendication 1,
dans laquelle le second système (102) est configuré pour se fondre avec le troisième système (104) dans la buse d'injection de combustible (12).

5. Procédé pour le fonctionnement de l'unité de combustion pour turbine à gaz selon la revendication 1,
dans lequel le combustible fossile liquide (18) est alimenté au premier système (100),
l'alcool combustible (21) qui a été chauffé par le moyen pour chauffer l'alcool combustible (21) est alimenté au second système (102), et
l'air d'atomisation (22) qui a été utilisé pour chauffer l'alcool combustible (21) par le moyen pour chauffer l'alcool combustible (21) est alimenté au troisième système (104).

6. Procédé pour le fonctionnement de l'unité de combustion pour turbine à gaz selon la revendication 5,
dans lequel du bioéthanol à base de plantes (21) est alimenté au second système (102) à titre d'alcool combustible.
